(19) Europäisches Patentamt
European Patent Office
Office européen des brevets

(11) **EP 4 685 256 A1**

(12) **EUROPEAN PATENT APPLICATION**

(43) Date of publication:
28.01.2026 Bulletin 2026/05

(21) Application number: 25190441.3

(22) Date of filing: 18.07.2025

(51) International Patent Classification (IPC):
*C22C 21/12* (2006.01)    *C22C 21/14* (2006.01)
*H01M 4/134* (2010.01)    *H01M 4/66* (2006.01)

(52) Cooperative Patent Classification (CPC):
**C22C 21/14; C22C 21/12; H01M 4/505;
H01M 4/525; H01M 4/661; H01M 10/0525**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: 22.07.2024 KR 20240096575

(71) Applicant: SAMSUNG SDI CO., LTD.
Yongin-si, Gyeonggi-do 17084 (KR)

(72) Inventors:
• **Ju, Hyejin**
17084 Yongin-si, Gyeonggi-do (KR)

• **Kim, Yongsic**
17084 Yongin-si, Gyeonggi-do (KR)
• **Shin, Ho Sik**
17084 Yongin-si, Gyeonggi-do (KR)
• **Yoo, Heeeun**
17084 Yongin-si, Gyeonggi-do (KR)
• **Lee, Eunsol**
17084 Yongin-si, Gyeonggi-do (KR)

(74) Representative: **Gulde & Partner**
**Patent- und Rechtsanwaltskanzlei mbB**
**Berliner Freiheit 2**
**10785 Berlin (DE)**

(54) **POSITIVE ELECTRODE CURRENT COLLECTORS FOR RECHARGEABLE LITHIUM BATTERIES, ELECTRODES CONTAINING POSITIVE ELECTRODE CURRENT COLLECTORS, AND RECHARGEABLE LITHIUM BATTERIES CONTAINING POSITIVE ELECTRODE CURRENT COLLECTORS**

(57) The present disclosure relates to a positive electrode current collector for a rechargeable lithium battery, a positive electrode including the positive electrode current collector , and a rechargeable lithium battery including the positive electrode current collector. In particular, the present disclosure relates to a positive electrode current collector being formed from a heterogeneous Al alloy comprising or essentially consisting of a first phase consisting of Al, Cu, Fe and unavoidable impurities; and a second phase consisting of Al, Cu, Fe, Si and unavoidable impurities.

EP 4 685 256 A1

**Description**

**BACKGROUND**

**1. Field**

The present disclosure relates to positive electrode current collectors for rechargeable lithium batteries, positive electrodes containing the positive electrode current collectors, and rechargeable lithium batteries containing the positive electrode current collectors.

**2. Description of the Related Art**

Rechargeable lithium batteries typically have three times or greater energy density per unit weight than conventional batteries such as lead storage batteries, nickel-cadmium batteries, nickel hydrogen batteries, nickel zinc batteries, and the like. Rechargeable lithium batteries may be charged at a relatively improved rate and thus, is commercially utilized in laptops, cell phones, electric tools, electric bikes, and the like. Nowadays, research on further improvement of energy density is actively being conducted.

A rechargeable lithium battery is typically manufactured by injecting an electrolyte solution into an electrode assembly, which includes a positive electrode including a positive electrode active material capable of intercalating/-deintercalating lithium ions and a negative electrode including a negative electrode active material capable of intercalating/deintercalating lithium ions.

In order to manufacture a high-capacity and/or high-density rechargeable lithium battery, it is necessary to make an electrode current collector into a thin film. Al (aluminum) can be used as the material for the thin film positive electrode current collector, however the thin Al (aluminum) positive electrode current collector is vulnerable to heat and pressure.

For example, if the Al positive electrode current collector is made into a thin film, crystallinity changes as a crystal (grain) may grow in the positive electrode current collector due to heat and/or a pressure generated during the manufacturing of the rechargeable lithium battery. This may lead to a decrease in tensile strength of the positive electrode current collector.

The crystal size growth and crystallinity change may lead to deterioration of mechanical properties of the Al positive electrode current collector and a positive electrode including the Al positive electrode current collector, for example, physical damage to the positive electrode may happen, such as pin-holes, cracks, etc., thereby deteriorating safety of the rechargeable lithium battery.

**SUMMARY**

The invention is defined by the appended claims. The description that follows is subjected to this limitation. Any disclosure lying outside the scope of said claims is only intended for illustrative as well as comparative purposes.

In an embodiment, a positive electrode current collector is configured to improve the safety of a rechargeable lithium battery by minimizing deterioration in mechanical properties even when made thin.

**BRIEF DESCRIPTION OF THE DRAWINGS**

The following drawings attached to this specification illustrate embodiments of the present disclosure, and describe aspects and features of the present disclosure together with the detailed description of the present disclosure. The present disclosure is not limited to embodiments depicted in the drawings.

FIGS. 1 to 4 are schematic views showing rechargeable lithium batteries according to embodiments of the present disclosure. FIG. 1 shows a cylindrical battery, FIG. 2 shows a prismatic battery, and FIGS. 3 and 4 show pouch-type batteries.

FIG. 5 is a schematic view showing a portion where physical damage occurs when applying a conventional thin film collector according to embodiments of the present disclosure.

FIG. 6 is a graphical representation showing dynamic mechanical thermal analysis of the positive electrode current collector at certain temperatures according to embodiments of the present disclosure.

FIG. 7 is a graphical representation showing tensile strengths of the positive electrode current collector as a function of temperature according to embodiments of the present disclosure.

FIG. 8 is a photographic representation showing Scanning Transmission Electron Microscopy (STEM) analysis of the positive electrode current collector according to embodiments of the present disclosure.

## DETAILED DESCRIPTION

The embodiments described in this specification and the configurations shown in the drawings are only some of the embodiments of the present disclosure.

In the drawings, thicknesses of some components can be exaggerated for effectively explaining the technical contents. Like reference numerals refer to like elements throughout the specification.

The embodiments described herein can be explained with reference to cross-sectional views and/or plan views as example views of the present disclosure. In the drawing, the thicknesses of films and regions can be exaggerated for effective description of technical contents. Thus, regions presented as an example in the drawings have general properties, and shapes of the exemplified areas can be used to illustrate a specific shape of a device region. Therefore, this should not be construed as limited to the scope of the present disclosure. Although the terms such as first, second, and third are used to describe various components in various embodiments herein, the components should not be limited to these terms. These terms are used only to distinguish one component from another component. Embodiments described and exemplified herein include complementary embodiments thereof.

Terms used herein are not for limiting the present disclosure but for describing the embodiments. As used herein, the singular forms include the plural forms as well, unless the context clearly indicates otherwise. The meaning of "includes," "including," "comprises," and/or "comprising," used herein does not exclude the presence or addition of one or more other components besides a mentioned component.

The terms "essentially forming" and "consisting essentially of" mean that specific additional components may be present, provided that they do not materially affect the essential characteristics of a composition.

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

References to two compared elements, features, etc. as being "the same" may mean that they are "substantially the same". Thus, the phrase "substantially the same" may include a case having a deviation that is considered low in the art. In addition, when a certain parameter is referred to as being uniform in a given region, it may mean that it is uniform in terms of an average.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements. In addition, it will be understood that when a component is referred to as being "linked," "coupled," or "connected" to another component, the elements may be directly "coupled," "linked" or "connected" to each other, or another component may be "interposed" between the components".

Numerical ranges disclosed and/or recited herein include all sub-ranges of the same numerical precision subsumed within the recited ranges. For example, a range of "1.0 to 10.0" includes all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein includes all lower numerical limitations subsumed therein, and any minimum numerical limitation recited in this specification includes all higher numerical limitations subsumed therein.

**Positive Electrode Current Collector**

Embodiments of the present disclosure provide a positive electrode current collector for a rechargeable lithium battery. The positive electrode current collector is formed of a heterogeneous Al alloy comprising or essentially consisting of:

a first phase consisting of Al, Cu, Fe and unavoidable impurities; and
a second phase consisting of Al, Cu, Fe, Si and unavoidable impurities,
wherein the second phase satisfies Formula 1:

$$[\text{Formula 1}]$$

$$0 < 100*A/(A+B) \leq 20$$

where A is a content of Si (at%) and B is a content of Cu (at%) based on the total amount of 100 at% of the second phase.

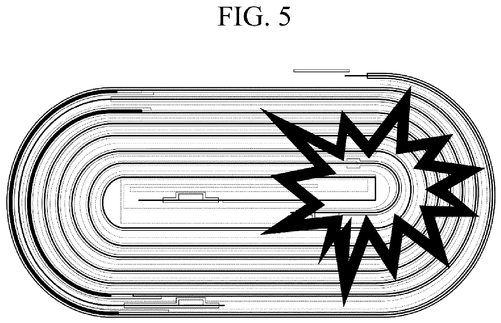

The second phase satisfies Formula 1, so that even if the positive electrode current collector is thinned, deterioration of mechanical properties may be minimized, thereby improving safety of the rechargeable lithium battery.
For example, in line with the recent trend toward seeking higher capacity and lighter weight rechargeable lithium batteries, a thin film positive electrode current collector is typically used, but as shown in FIG. 5, in areas close to the center of a jelly roll, the curvature radius of the corresponding region of the current collector, where the active material layer is coated, becomes relatively small, resulting in a severe degree of folding. Accordingly, in such a region of the current collector, physical damage (e.g., cracks and/or fractures) may occur, the positive and negative electrodes may meet, causing a short circuit.
In this regard, Cu can be used as an alloying element to minimize the mechanical property deterioration even when thinned.

Total Al and Total Cu Content

In an embodiment, the positive electrode current collector may utilize an alloy including Al as a primary component and one or more other elements as secondary components. As used herein, the term "primary component" means that Al is included as a main component of the Al alloy, respectively the first phase as well as the second phase.
The one or more secondary components include Cu as an element capable of compensating any deficiencies related to the mechanical properties of Al.
In an embodiment, a total Cu content (i.e., a Cu content within the aluminum alloy current collector including both, the first phase and the second phase) may be 16.0 to 22.0 at% based on a total amount of 100 at% of the first phase and the second phase. For example, the total Cu content may be 17.0 to 21.0 at%, in particular 18.0 to 20.0 at% based on a total amount of 100 at% of the first phase and the second phase.
In the event the positive electrode current collector is made into a thin film, a post-heat treatment tensile strength decrease rate may be reduced and accordingly, crack defects may happen relatively less frequently in a positive electrode including the thin-filmed positive electrode current collector.

Second Phase

The Al alloy for forming the positive electrode current collector includes or essentially consists of a first phase and a second phase. The first phase dominates and domains composed of the second phase are disbursed with the matrix composed of the first phase.
The second phase may be located at grain boundaries inside the first phase.
The metallic morphology may suppress crystal growth of Al, even when heat and/or pressure is generated during the manufacturing process of a rechargeable lithium battery.
The positive electrode current collector is formed of a heterogeneous Al alloy comprising or essentially consisting of:

a first phase consisting of Al, Cu, Fe and unavoidable impurities; and
a second phase consisting of Al, Cu, Fe, Si and unavoidable impurities.
The second phase satisfies Formula 1:

[Formula 1]

$$0 < 100*A/(A+B) \leq 20$$

where A is a content of Si (at%) and B is a content of Cu (at%) based on the total amount of 100 at% of the second phase.

Thereby, mechanical properties of the positive electrode current collector may be improved.

In an embodiment, the second phase may satisfy Formula 1-1, 1-2, or 1-3:

[Formula 1-1]

$$0 < 100*A/(A+B) \leq 15$$

[Formula 1-2]

$$0 < 100*A/(A+B) \leq 10$$

[Formula 1-3]

$$0 < 100*A/(A+B) \leq 5$$

In an embodiment, the second phase may further satisfy Formula 2 such that mechanical properties of the positive electrode current collector may be further improved:

[Formula 2]

$$20 \leq 100*B/(B+C) \leq 60$$

where B is a Cu content (at%) based on a total amount of 100 at% of the second phase, and C is an Al content (at%) based on a total amount of 100 at% of the second phase.

In an embodiment, the second phase may further satisfy Formula 2-1, 2-2, or 2-3:

[Formula 2-1]

$$20 \leq 100*B/(B+C) \leq 60$$

[Formula 2-2]

$$30 \leq 100*B/(B+C) \leq 55$$

[Formula 2-3]

$$40 \leq 100*B/(B+C) \leq 50$$

In an embodiment, the second phase may further satisfy Formula 3 such that mechanical properties of the positive electrode current collector may be further improved:

[Formula 3]

$$0 < 100*B/(B+D) \leq 35$$

where A is a content of Si (at%) based on a total amount of 100 at% of the second phase, B is a content (at%) of Cu based on a total amount of 100 at% of the second phase, and D is a Fe content (at%) based on a total amount of 100 at% of the second phase.

In an embodiment, the second phase may further satisfy Formula 3-1, 3-2, or 3-3:

[Formula 3-1]

$$0 < 100*B/(B+D) \leq 30$$

[Formula 3-2]

$$0 < 100*B/(B+D) \leq 25$$

[Formula 3-4]

$$0 < 100*B/(B+D) \leq 20$$

In an embodiment, based on a total amount of 100 at% of the second phase, Si may be included in an amount greater than or equal to 0.1 at% to 4 at%, greater than or equal to 0.5 at% to less than or equal to 3 at%, greater than or equal to 1 at% to less than or equal to 2 at%; Cu may be included in an amount greater than or equal to 20 at% to less than or equal to 60 at%, greater than or equal to 30 at% to 50 at%, or 40 at% to 45 at%; Fe is included in an amount greater than or equal to 1 at% to less than or equal to 15 at%, greater than or equal to 3 at% to less than or equal to 12 at%, or 5 at% to 10 at%; and the remainder includes Al and unavoidable impurities.

First Phase

The first phase of the heterogeneous Al alloy consists of Al, Cu, Fe and unavoidable impurities. The first phase may satisfy Formula 4 such that mechanical properties of the positive electrode current collector may be further improved:

[Formula 4]

$$10 \leq 100*Y/(Y+Z) \leq 50$$

where Y is a Cu content (at%) based on a total amount of 100 at% of the first phase, and Z is an Al content (at%) based on a total amount of 100 at% of the first phase.

In an embodiment, the first phase may satisfy Formula 4-1, 4-2, or 4-3:

[Formula 4]

$$10 \leq 100*Y/(Y+Z) \leq 40$$

[Formula 4]

$$10 \leq 100*Y/(Y+Z) \leq 30$$

[Formula 4]

$$10 \leq 100*Y/(Y+Z) \leq 20$$

In an embodiment, the first phase may further satisfy Formula 5 such that mechanical properties of the positive electrode current collector may be further improved:

[Formula 5]

$$0 < 100*(W)/(Y+W) \leq 1$$

where Y is a Cu content (at%) based on a total amount of 100 at% of the first phase, and W is an Fe content (at%) based on a total amount of 100 at% of the first phase.

In an embodiment, , the first phase may further satisfy Formula 5-1, 5-2, or 5-3:

[Formula 5-1]

$$0 < 100*(W)/(Y+W) \leq 0.99$$

[Formula 5-2]

$$0 < 100*(W)/(Y+W) \leq 0.97$$

[Formula 5-3]

$$0 < 100*(W)/(Y+W) \leq 0.95$$

In an embodiment, based on a total amount of 100 at% of the first phase, Cu may be included in an amount greater than or equal to 1 at% to less than or equal to 25 at%, greater than or equal to 5 at% to 25 at%, or 10 at% to 20 at%; Fe may be included in an amount greater than or equal to 0.01 at% to less than or equal to 0.5 at%, greater than or equal to 0.1 at% to less than or equal to 0.3 at%, or 0.5 at% to 0.1 at%; and the remainder may include Al and unavoidable impurities.

The aluminum alloy current collector may have a thickness of 5 $\mu$m to 20 $\mu$m, 7 $\mu$m to 15 $\mu$m, or 8 $\mu$m to 10 $\mu$m. In an embodiment, even if the positive electrode current collector is made into a thin film, the mechanical properties may be minimally deteriorated, improving safety of the rechargeable lithium battery.

**Method for Manufacturing Positive Electrode Current Collector**

Embodiments of the present disclosure provide a method for manufacturing the positive electrode current collector for a rechargeable lithium battery which includes manufacturing a hot-rolled plate by hot-rolling a slab bein formed of the heterogeneous Al alloy; and cold-rolling the hot-rolled plate to obtain a positive electrode current collector.

In an embodiment, the hot-rolled plate may be rolled to a final target thickness during cold rolling, wherein the final target thickness may be the thickness of the positive electrode current collector.

**Positive Electrode and Rechargeable Lithium Battery**

Embodiments of the present disclosure provide a positive electrode for a rechargeable lithium battery including the positive electrode current collector.

Embodiments of the present disclosure also provide a rechargeable lithium battery including the positive electrode.

Positive Electrode Active Material

The positive electrode active material may include a compound (lithiated intercalation compound) capable of intercalating and deintercalating lithium. In an embodiment, one or more types of composite oxides of lithium and a metal selected from cobalt, manganese, nickel, and combinations thereof may be used.

The composite oxide may be a lithium transition metal composite oxide, and non-limiting examples may include a lithium nickel-based oxide, a lithium cobalt-based oxide, a lithium manganese-based oxide, a lithium iron phosphate-based compound, a cobalt-free lithium nickel-manganese-based oxide, or a combination thereof.

As a non-limiting example, a compound represented by any of the following chemical formulas may be used.

$\text{Li}_a\text{A}_{1-b}\text{X}_b\text{O}_{2-c}\text{D}_c$ (0.90≤a≤1.8, 0≤b≤0.5, 0≤c≤0.05); $\text{Li}_a\text{Mn}_{2-b}\text{X}_b\text{O}_{4-c}\text{D}_c$ (0.90≤a≤1.8, 0≤b≤0.5, 0≤c≤0.05); $\text{Li}_a\text{Ni}_{1-b-c}\text{Co}_b\text{X}_c\text{O}_{2-\alpha}\text{D}_\alpha$ (0.90≤a≤1.8, 0≤b≤0.5, 0≤c≤0.5, 0<α<2); $\text{Li}_a\text{Ni}_{1-b-c}\text{Mn}_b\text{X}_c\text{O}_{2-\alpha}\text{D}_\alpha$ (0.90≤a≤1.8, 0≤b≤0.5, 0≤c≤0.5, 0<α<2); $\text{Li}_a\text{Ni}_b\text{Co}_c\text{L}^1_d\text{G}_e\text{O}_2$ (0.90≤a≤1.8, 0≤b≤0.9, 0≤c≤0.5, 0≤d≤0.5, 0≤e≤0.1); $\text{Li}_a\text{NiG}_b\text{O}_2$ (0.90≤a≤1.8, 0.001≤b≤0.1); $\text{Li}_a\text{CoG}_b\text{O}_2$ (0.90≤a≤1.8, 0.001≤b≤0.1); $\text{Li}_a\text{Mn}_{1-b}\text{G}_b\text{O}_2$ (0.90≤a≤1.8, 0.001≤b≤0.1); $\text{Li}_a\text{Mn}_2\text{G}_b\text{O}_4$ (0.90≤a≤1.8, 0.001≤b≤0.1); $\text{Li}_a\text{Mn}_{1-g}\text{G}_g\text{PO}_4$ (0.90≤a≤1.8, 0≤g≤0.5); $\text{Li}_{(3-f)}\text{Fe}_2(\text{PO}_4)_3$ (0≤f≤2); and $\text{Li}_a\text{FePO}_4$ (0.90≤a≤1.8) where A is Ni, Co, Mn, or a combination thereof; X is Al, Ni, Co, Mn, Cr, Fe, Mg, Sr, V, a rare earth element, or a combination thereof; D is O, F, S, P, or a combination thereof; G is Al, Cr, Mn, Fe, Mg, La, Ce, Sr, V, or a combination thereof; and $\text{L}^1$ is Mn, Al, or a combination thereof.

In an embodiment, the positive electrode active material may include a lithium nickel-based oxide represented by Chemical Formula 11, a lithium cobalt-based oxide represented by Chemical Formula 12, a lithium iron phosphate-based compound represented by Chemical Formula 13, a cobalt-free lithium nickel-manganese-based oxide represented by Chemical Formula 14, or a combination thereof.

[Chemical Formula 11]     $\text{Li}_{a1}\text{Ni}_{x1}\text{M}^1_{y1}\text{M}^2_{z1}\text{O}_{2-b1}\text{X}_{b1}$

where 0.9≤a1≤1.8, 0.3≤x1≤1, 0≤y1≤0.7, 0≤z1≤0.7, 0.9≤x1+y1+z1≤1.1, and 0≤b1≤0.1, $\text{M}^1$ and $\text{M}^2$ are each independently one or more selected from Al, B, Ba, Ca, Ce, Co, Cr, Cu, Fe, Mg, Mn, Mo, Nb, Si, Sn, Sr, Ti, V, W, and Zr, and X is one or more selected from F, P, and S.

In an embodiment, 0.6≤x1≤1, 0≤y1≤0.4, and 0≤z1≤0.4. In an embodiment, 0.8≤x1≤1, 0≤y1≤0.2, and 0≤z1≤0.2.

[Chemical Formula 12]     $\text{Li}_{a2}\text{CO}_{x2}\text{M}^3_{y2}\text{O}_{2-b2}\text{X}_{b2}$

where 0.9≤a2≤1.8, 0.7≤x2≤1, 0≤y2≤0.3, 0.9≤x2+y2≤1.1, and 0≤b2≤0.1, $\text{M}^3$ is one or more selected from Al, B, Ba, Ca, Ce, Cr, Cu, Fe, Mg, Mn, Mo, Ni, Se, Si, Sn, Sr, Ti, V, W, Y, Zn, and Zr, and X is one or more selected from F, P, and S.

[Chemical Formula 13]     $\text{Li}_{a3}\text{Fe}_{x3}\text{M}^4_{y3}\text{PO}_{4-b3}\text{X}_{b3}$

where 0.9≤a3≤1.8, 0.6≤x3≤1, 0≤y3≤0.4, and 0≤b3≤0.1, $\text{M}^4$ is one or more selected from Al, B, Ba, Ca, Ce, Co, Cr, Cu, Mg, Mn, Mo, Ni, Se, Si, Sn, Sr, Ti, V, W, Y, Zn, and Zr, and X is one or more selected from F, P, and S.

[Chemical Formula 14]     $\text{Li}_{a4}\text{Ni}_{x4}\text{Mn}_{y4}\text{M}^5_{z4}\text{O}_{2-b4}\text{X}_{b4}$

where 0.9≤a4≤1.8, 0.8≤x4<1, 0<y4≤0.2, 0≤z4≤0.2, 0.9≤x4+y4+z4≤1.1, and 0≤b4≤0.1, $\text{M}^5$ is one or more element selected from Al, B, Ba, Ca, Ce, Cr, Fe, Mg, Mo, Nb, Si, Sn, Sr, Ti, V, W, and Zr, and X is one or more selected from F, P, and S.

In an embodiment, the positive electrode active material may include a high nickel-content positive electrode active material having a nickel content of greater than or equal to 80 mol%, greater than or equal to 85 mol%, greater than or equal to 90 mol%, greater than or equal to 91 mol%, or greater than or equal to 94 mol%, and less than or equal to 99 mol% based on 100 mol% of metals excluding lithium in the lithium transition metal composite oxide. The high nickel-content positive electrode active material can achieve high capacity and can be utilized in a high-capacity, high-density rechargeable lithium battery.

Positive Electrode

The positive electrode includes a current collector and a positive electrode active material layer on the current collector. The positive electrode active material layer may include a positive electrode active material and may further include a binder and/or a conductive material.

In an embodiment, the positive electrode may further include an additive that can function as a sacrificial positive electrode.

An amount of the positive electrode active material may be 90 wt% to 99.5 wt%, and each amount of the binder and the conductive material may be 0.5 wt% to 5 wt% based on 100 wt% of the positive electrode active material layer.

The binder is configured to adhere particles of the positive electrode active material to one another and also to adhere the positive electrode active material to the current collector. Non-limiting examples of the binder may include polyvinyl alcohol, carboxymethyl cellulose, hydroxypropyl cellulose, diacetyl cellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and the like.

The conductive material may be used to ensure conductivity (e.g., electrical conductivity) to the electrode. Any material that does not contribute to chemical change (e.g., does not contribute to an undesirable chemical change in the rechargeable lithium battery) while conducting electrons may be used in the battery. Non-limiting examples of the conductive material may include a carbon-based material such as natural graphite, artificial graphite, carbon black, acetylene black, ketjen black, a carbon fiber, a carbon nanofiber, and carbon nanotube; a metal-based material including copper, nickel, aluminum, silver, etc., in a form of a metal powder or a metal fiber; a conductive polymer such as a polyphenylene derivative; or a mixture thereof.

Negative Electrode Active Material

The negative electrode active material may include a material capable of reversibly intercalating/deintercalating lithium ions, a lithium metal, a lithium metal alloy, a material capable of doping and dedoping lithium, or a transition metal oxide.

The material capable of reversibly intercalating/deintercalating lithium ions may include a carbon-based negative electrode active material such as crystalline carbon, amorphous carbon or a combination thereof. The crystalline carbon may include graphite such as non-shaped, plate-shaped, flake-shaped, sphere-shaped, or fiber-shaped natural graphite or artificial graphite. The amorphous carbon may include a soft carbon, a hard carbon, a mesophase pitch carbonization product, calcined coke, and the like.

The lithium metal alloy may include lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may include a Si-based negative electrode active material or a Sn-based negative electrode active material. The Si-based negative electrode active material may include silicon, a silicon-carbon composite, $SiO_x$ ($0 < x \leq 2$), a Si-Q alloy (wherein Q is selected from an alkali metal, an alkaline-earth metal, a Group 13 element, a Group 14 element (excluding Si), a Group 15 element, a Group 16 element, a transition metal, a rare earth element, and a combination thereof), or a combination thereof. The Sn-based negative electrode active material may include Sn, $SnO_2$, an Sn-based alloy, or a combination thereof.

The silicon-carbon composite may include a composite of silicon and amorphous carbon. In an embodiment, the silicon-carbon composite may exist in a form of silicon particles where amorphous carbon is coated on the surface of the silicon particles. In an embodiment, the silicon-carbon composite may include a secondary particle (core) where primary silicon particles are assembled, and an amorphous carbon coating layer (shell) is formed on the surface of the secondary particle. In an embodiment, the amorphous carbon may be positioned between primary silicon particles. In an embodiment, the primary silicon particles may be coated with the amorphous carbon. The secondary particle may exist as dispersed in an amorphous carbon matrix.

The silicon-carbon composite may further include crystalline carbon. In an embodiment, the silicon-carbon composite may include a core including crystalline carbon and silicon particles and an amorphous carbon coating layer on a surface of the core.

The Si-based negative electrode active material or the Sn-based negative electrode active material may be used in combination with a carbon-based negative electrode active material.

Negative Electrode

The negative electrode for a rechargeable lithium battery may include a current collector and a negative electrode active material layer on the current collector. The negative electrode active material layer may include a negative electrode active material and may further include a binder and/or a conductive material.

In an embodiment, the negative electrode active material layer may include 90 wt% to 99 wt% of the negative electrode active material, 0.5 wt% to 5 wt% of the binder, and 0.5 wt% to 5 wt% of the conductive material.

The binder is configured to adhere particles of the negative electrode active material to one another and also to adhere the negative electrode active material to the current collector. The binder may include a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may include a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and a combination thereof.

When an aqueous binder is used as the negative electrode binder, it may further include a cellulose-based compound capable of enhancing viscosity. The cellulose-based compound includes one or more of carboxylmethyl cellulose, hydroxypropylmethyl cellulose, methyl cellulose, or alkali metal salts thereof. The alkali metal may be Na, K, or Li.

The dry binder may include a polymer material capable of being fiberized. Non-limiting examples of the polymer material may include polytetrafluoroethylene, polyvinylidene fluoride, polyvinylidene fluoride-hexafluoropropylene copolymer, polyethylene oxide, or a combination thereof.

The conductive material may be used to ensure conductivity (e.g., electrical conductivity) to the electrode. Any material that does not contribute to chemical change (e.g., does not contribute to an undesirable chemical change in the rechargeable lithium battery) while conducting electrons may be used in the battery. Non-limiting examples of the conductive material may include a carbon-based material such as natural graphite, artificial graphite, carbon black, acetylene black, ketjen black, a carbon fiber, a carbon nanofiber, a carbon nanotube, and the like; a metal-based material such as copper, nickel, aluminum silver, and the like, in a form of a metal powder or a metal fiber; a conductive polymer such as a polyphenylene derivative; or a mixture thereof.

The negative electrode current collector may include a copper foil, a nickel foil, a stainless steel foil, a titanium foil, a nickel foam, a copper foam, a polymer substrate coated with a conductive metal, or a combination thereof.

Electrolyte Solution

The electrolyte solution for the rechargeable lithium battery may include a non-aqueous organic solvent and a lithium salt.

The non-aqueous organic solvent is configured to serve as a medium for transmitting ions taking part in the electrochemical reaction of the battery.

The non-aqueous organic solvent may include a carbonate-based, ester-based, ether-based, ketone-based, alcohol-based solvent, aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate. (EC), propylene carbonate (PC), butylene carbonate (BC), etc. The ester-based solvent may include methyl acetate, ethyl acetate, n-propyl acetate, dimethylacetate, methylpropionate, ethylpropionate, decanolide, mevalonolactone, valerolactone, caprolactone, and the like. The ether-based solvent may include dibutyl ether, tetraglyme, diglyme, dimethoxyethane, 2-methyltetrahydrofuran, 2,5-dimethyltetrahydrofuran, tetrahydrofuran, and the like. The ketone-based solvent may include cyclohexanone. The alcohol-based solvent may include ethyl alcohol, isopropyl alcohol, and the like. The aprotic solvent may include nitriles such as R-CN (wherein R is a C2 to C20 linear, branched, or cyclic hydrocarbon group, a double bond, an aromatic ring, or an ether group), amides such as dimethylformamide, dioxolanes such as 1,3-dioxolane or 1,4-dioxolane, sulfolanes, and the like.

The non-aqueous organic solvent may be used alone or in combination of two or more non-aqueous organic solvents.

When using a carbonate-based solvent, cyclic carbonate and chain carbonate can be mixed and used. In an embodiment, cyclic carbonate and chain carbonate may be mixed at a volume ratio of about 1:1 to about 1:9.

The lithium salt dissolved in the organic solvent is configured to supply lithium ions in a battery, enable a basic operation of a rechargeable lithium battery, and improve transportation of the lithium ions between positive and negative electrodes. Non-limiting examples of the lithium salt may include $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_3C_2F_5)_2$, $Li(FSO_2)_2N$ (lithium bis(fluorosulfonyl)imide, LiFSI), $LiC_4F_9SO_3$, $LiN(C_xF_{2x+1}SO_2)(C_yF_{2y+1}SO_2)$ (x and y are integers from 1 to 20), lithium trifluoromethane sulfonate, lithium tetrafluoroethanesulfonate, lithium difluorobis(oxalato)phosphate, (LiDFOB), lithium bis(oxalato)borate (LiBOB), and combinations thereof.

Separator

Depending on the type of the rechargeable lithium battery, a separator may be present between the positive electrode and the negative electrode. The separator may include polyethylene, polypropylene, polyvinylidene fluoride, or a multilayer film including two or more layers thereof, a mixed multilayer film including a polyethylene/polypropylene two-layer separator, polyethylene/polypropylene/polyethylene three-layer separator, polypropylene/polyethylene/polypropylene three-layer separator, and the like.

The separator may include a porous substrate and a coating layer including an organic material, an inorganic material, or a combination thereof on one or both surfaces of the porous substrate.

The porous substrate may include a polymer film formed of a polymer, copolymer, or mixture of two or more of polyolefin such as polyethylene or polypropylene, a polyester such as polyethyleneterephthalate or polybutyleneterephthalate, polyacetal, polyamide, polyimide, polycarbonate, polyether ketone, polyaryl ether ketone, polyether imide, polyamideimide, polybenzimidazole, polyether sulfone, polyphenyleneoxide, a cyclic olefin copolymer, polyphenylenesulfide, polyethylenenaphthalate, a glass fiber, TEFLON (tetrafluoroethylene), and polytetrafluoroethylene.

The organic material may include a polyvinylidene fluoride-based polymer or a (meth)acrylic polymer.

The inorganic material may include inorganic particles selected from $Al_2O_3$, $SiO_2$, $TiO_2$, $SnO_2$, $CeO_2$, MgO, NiO, CaO, GaO, ZnO, $ZrO_2$, $Y_2O_3$, $SrTiO_3$, $BaTiO_3$, $Mg(OH)_2$, boehmite, and a combination thereof, but is not limited thereto.

The organic material and the inorganic material may be mixed in one coating layer, or a coating layer including an organic material and a coating layer including an inorganic material may be stacked.

Rechargeable Lithium Battery

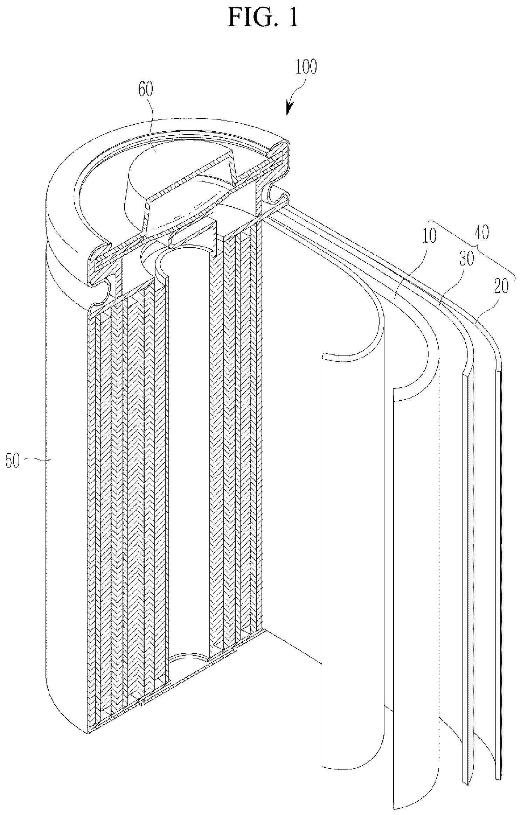

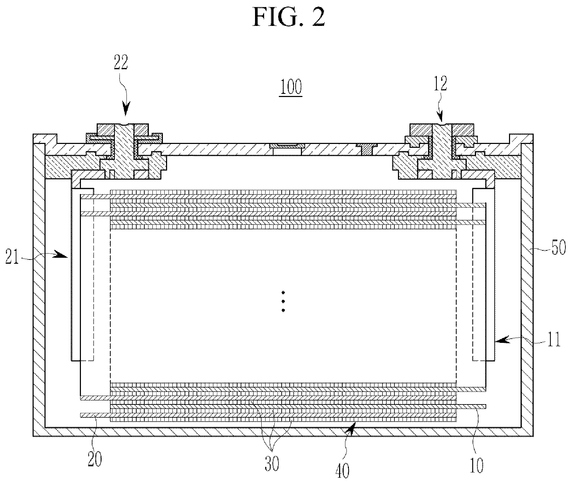

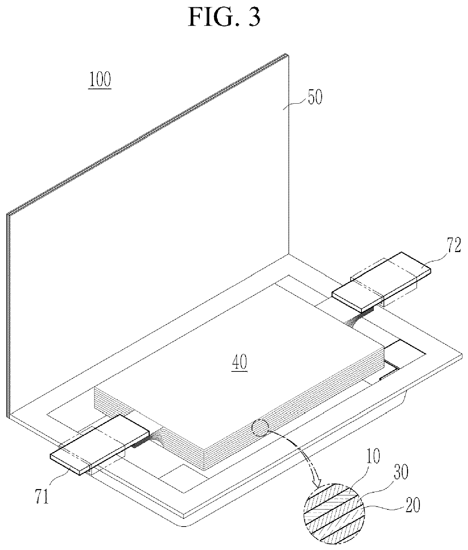

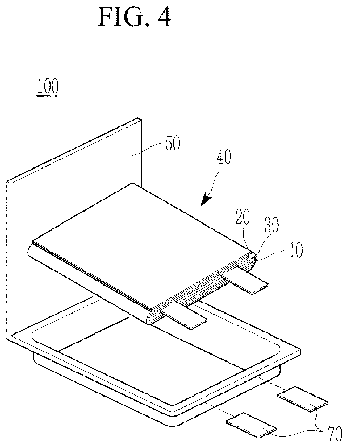

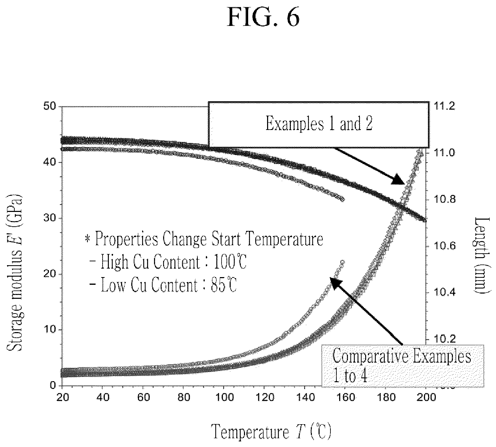

The rechargeable lithium battery may be classified into cylindrical, prismatic, pouch, or coin-type batteries, and the like, depending on their shape. FIGS. 1 to 4 are schematic views showing a rechargeable lithium battery 100 according to embodiments of the present disclosure. FIG. 1 shows a cylindrical battery, FIG. 2 shows a prismatic battery, and FIGS. 3 and 4 show pouch-type batteries. Referring to FIGS. 1 to 4, the rechargeable lithium battery 100 may include an electrode assembly 40 including a separator 30 between a positive electrode 10 and a negative electrode 20, and a case 50 in which the electrode assembly 40 is housed. The positive electrode 10, the negative electrode 20, and the separator 30 may be impregnated with an electrolyte solution (not shown). The rechargeable lithium battery 100 may include a sealing member 60 sealing the case 50, as shown in FIG. 1. In addition, in FIG. 2, the rechargeable lithium battery 100 may include a positive electrode lead tab 11, a positive terminal 12, a negative electrode lead tab 21, and a negative terminal 22. As shown in FIGS. 5 and 6, the rechargeable lithium battery 100 includes an electrode tab 70, for example, a positive electrode tab 71 and a negative electrode tab 72 serving as an electrical path for inducing the current formed in the electrode assembly 40 to the outside.

In an embodiment, the rechargeable lithium battery may be utilized in automobiles, mobile phones, and/or various types of electrical devices, but the present disclosure is not limited thereto.

The present disclosure will be described in more detail through Examples. However, Examples are only illustrations for describing the present disclosure, and the scope of the present disclosure is not limited to Examples.

**Example 1**

(1) Manufacturing of positive electrode current collector

An Al slab was hot-rolled to manufacture a hot rolled plate. The Al slab was made of a heterogeneous Al alloy including Cu, Si, Fe, and unavoidable impurities. Subsequently, the hot rolled plate was cold-rolled to obtain a 9 $\mu$m-thick positive electrode current collector.

(2) Manufacturing of Positive Electrode

$LiNi_{0.75}Mn_{0.23}Al_{0.02}O_2$ was used as a positive electrode active material, polyvinylidene fluoride was used as a binder, and acetylene black was used as a conductive material. These were mixed in a weight ratio of 96:3:1 then dispersed in N-methyl pyrrolidone to prepare a positive electrode active material slurry.

The positive electrode active material slurry was coated on the positive electrode current collector then dried at 80 to 180 °C, desirably 110 °C, and pressed to manufacture a positive electrode.

**Example 2**

An Al slab was hot-rolled to manufacture a hot rolled plate. The Al slab was made of another heterogeneous Al alloy including Cu, Si, Fe, and unavoidable impurities. Subsequently, the hot rolled plate was cold-rolled to obtain a 9 $\mu$m-thick positive electrode current collector.

A positive electrode current collector, a positive electrode, and a rechargeable lithium battery cell of Example 2 were manufactured in the same manner as in Example 1, except that the positive electrode current collector of Example 2 was used instead of the positive electrode current collector of Example 1.

**Comparative Example 1**

An Al slab was hot-rolled to manufacture a hot rolled plate. The Al slab was made of another heterogeneous Al alloy including Cu, Si, Fe, and unavoidable impurities. Subsequently, the hot rolled plate was cold-rolled to obtain a 9 $\mu$m-thick positive electrode current collector.

A positive electrode current collector, a positive electrode, and a rechargeable lithium battery cell of Example 2 were manufactured in the same manner as in Example 1, except that the positive electrode current collector of Comparative Example 1 was used instead of the positive electrode current collector of Example 1.

**Comparative Example 2**

An Al slab was hot-rolled to manufacture a hot rolled plate. The Al slab was made of another heterogeneous Al alloy including Cu, Si, Fe, and unavoidable impurities. Subsequently, the hot rolled plate was cold-rolled to obtain a 9 $\mu$m-thick positive electrode current collector.

A positive electrode current collector, a positive electrode, and a rechargeable lithium battery cell of Example 2 were manufactured in the same manner as in Example 1, except that the positive electrode current collector of Comparative Example 2 was used instead of the positive electrode current collector of Example 1.

**Comparative Example 3**

An Al slab was hot-rolled to manufacture a hot rolled plate. The Al slab was made of another heterogeneous Al alloy including Cu, Si, Fe, and unavoidable impurities. Subsequently, the hot rolled plate was cold-rolled to obtain a 9 $\mu$m-thick positive electrode current collector.

A positive electrode current collector, a positive electrode and a rechargeable lithium battery cell of Example 2 were manufactured in the same manner as in Example 1, except that the positive electrode current collector of Comparative Example 3 was used instead of the positive electrode current collector of Example 1.

**Comparative Example 4**

An Al slab was hot-rolled to manufacture a hot rolled plate. The Al slab was made of another heterogeneous Al alloy including Cu, Si, Fe, and unavoidable impurities. Subsequently, the hot rolled plate was cold-rolled to obtain a 9 $\mu$m-thick positive electrode current collector.

A positive electrode current collector, a positive electrode and a rechargeable lithium battery cell of Example 2 were manufactured in the same manner as in Example 1, except that the positive electrode current collector of Comparative Example 4 was used instead of the positive electrode current collector of Example 1.

**Evaluation Example 1**

The positive electrode current collectors and positive electrodes according to Examples 1 and 2 and Comparative Examples 1 to 4 were evaluated and the results are shown in Table 1.

(1) Total Cu content of the positive electrode current collector

An Energy Dispersive Spectroscopy (EDS) analyzer (6360F made by JEOL) was used to measure a total Cu content in each of the positive electrode current collectors. The EDS analyzer was set at a beam size of 0.1 $\mu$m.

(2) Tensile strength of the positive electrode current collector

Each of the positive electrode current collectors was cut to a size of width*length =12.5 mm*150 mm then heat-treated at 100 °C for 1 hour. The heat-treated positive electrode current collector was fixed in a vertical direction spaced by 50 mm using a gripper. Tensile strength was measured using Universal Test Machine (UTM) at 50 mm/min.

(3) Level of crack defect occurrence at the positive electrode

Each of the positive electrode current collectors was cut to a size of width*length = 12.5 mm*150 mm. After applying a pressure of 10 t/cm$^2$ using a hydraulic press, the degree of crack defects was evaluated in an order of 1 to 5 by counting the number of pin holes. Five samples per one example (or comparative example) were taken and respectively evaluated.

* Evaluation according to the number of pin holes

1 point: 1 or less
2 points: 2 to 3
3 points: 4 to 5
4 points: 5 or more (but not to the extent that the polarity is torn)
5 points: The positive electrode is torn

Table 1

|  | | | Example 1 | Example 2 | Compa rative Example 1 | Compa rative Example 2 | Compa rative Example 3 | Compa rative Example 4 |
|---|---|---|---|---|---|---|---|---|
| Positive electrode current collector | Total Cu content (at%) | | 19.9 | 18.7 | 11.3 | 11.6 | 10.8 | 10.8 |
| | Tensile strength $(N/mm^2)$ | | 303 | 307 | 280 | 295 | 306 | 306 |
| Positive electrode | Crack de-fect occur-rence level | sample 1 | 1 | 1 | 5 | 5 | 4 | 5 |
| | | sample 2 | 1 | 1 | 5 | 4 | 3 | 5 |
| | | sample 3 | 1 | 2 | 5 | 5 | 5 | 5 |
| | | sample 4 | 1 | 1 | 5 | 5 | 5 | 5 |
| | | sample 5 | 1 | 1 | 5 | 5 | 4 | 5 |

Referring to Table 1, in comparison with Comparative Examples 1 to 4, Examples 1 and 2 exhibited significantly reduced crack defects of the positive electrodes, exhibited a relatively high total Cu content of the positive electrode current collectors, and exhibited a relatively high post-heat treatment tensile strength.

Accordingly, when a total Cu content (i.e., a summarized overall Cu content of the first phase and Cu-richer second phase in the current collector) based on a total amount at% of each positive electrode current collector was in the range of 18.0 to 20.0 at%, even in the event the positive electrode current collector was thinned, reduction in post-heat treatment tensile strength decrease rate was observed. The positive electrode, including the thinned positive electrode current collector, exhibited less frequent episodes of crack defects.

### Evaluation Example 2

The positive electrode current collectors of Examples 1 and 2 and Comparative Examples 1 to 4 were evaluated while changing the temperature.

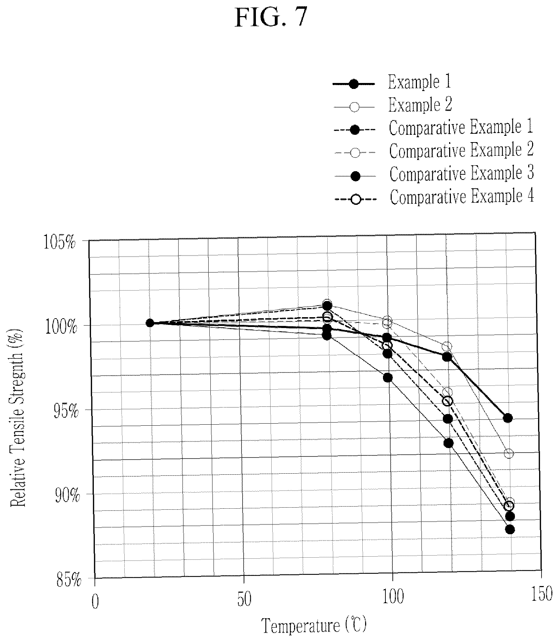

(1) Temperature-dependent dynamic mechanical thermal analysis of the positive electrode current collector
Temperatures of the positive electrode current collectors were increased from 20 °C to 200 °C at 5 to 20 °C/min. Dynamic mechanical thermal analysis per temperature was performed by using a dynamic mechanical thermal analyzer (DMA, Device name: DMA850, TA Instruments) under conditions of a chucking distance of 10 mm, an amplitude of 25 $\mu$m (0.25%), and a frequency of 0.5 Hz. The results are shown in FIG. 6.
(2) Temperature-dependent tensile strength of the positive electrode current collector
Temperatures of the positive electrode current collectors were increased from 20 °C to 200 °C at 5 to 20 °C/min. Positive electrode current collectors, at each temperature, were fixed in a vertical (length) direction at spaced by 50 mm using a gripper. Tensile strength was measured using UTM at 50 mm/min. The results are shown in FIG. 7.
(3) Referring to FIGS. 6 and 7, Examples 1 and 2 exhibited mechanical property changes starting at 100 °C, while Comparative Example 1 to 4 exhibited mechanical property changes starting at 85 °C. Accordingly, the examples exhibit enhanced mechanical properties, compared to those of the comparative examples.

### Evaluation Example 3

The positive electrode current collectors of Example 1 and Comparative Example 4 were evaluated.

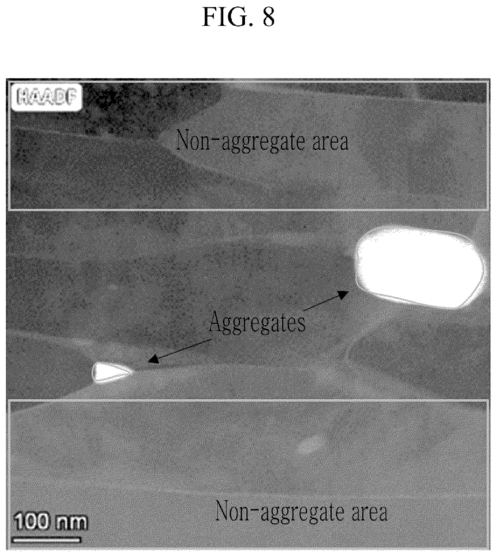

(1) Scanning Transmission Electron Microscopy (STEM)
A STEM analyzer was used to evaluate cross-sectional structures of the positive electrode current collectors, which are shown in FIG. 8.

(2) Energy Dispersive Spectroscopy (EDS)

An EDS analyzer (6360F made by JEOL) was used to measure element contents in an aggregate region in a positive electrode current collector and an aluminum alloy current collector region excluding the aggregate region. The EDS analyzer was set at a beam size of 0.1 $\mu$m.

Contents of Fe, Cu, and Si based on 100 at% of a total content of Fe, Cu, and Si (excluding Al) and contents of Al, Fe, Cu, and Si based on 100 at% of a total content of Fe, Cu, Si, and Al, were measured then rounded to the third decimal place. The results are shown in Table 2.

**Table 2**

| | | First phase | | | | Second phase | | | |
|---|---|---|---|---|---|---|---|---|---|
| | | Example 1 | | Comparative Example 4 | | Example 1 | | Comparative Example 4 | |
| | | Al included | Al excluded | Al included | Al excluded | Al included | Al excluded | Al included | Al excluded |
| unit: | Si | 0.00 | 0.00 | 0.00 | 0.00 | 1.7 | 3.31 | 4.52 | 19.98 |
| at% | Cu | 16.68 | 99.05 | 9.46 | 98.34 | 42.53 | 82.81 | 13.99 | 61.85 |
| | Al | 83.16 | - | 90.38 | - | 48.64 | - | 77.38 | - |
| | Fe | 0.16 | 0.95 | 0.16 | 1.66 | 7.13 | 13.88 | 4.11 | 18.17 |
| | Sum | 100 | 100 | 100 | 100 | 100 | 100 | 100 | 100 |
| 100*Si/(Cu+Si) | | 0.00 | 0.00 | 0.00 | 0.00 | 3.84 | 3.84 | 24.42 | 24.42 |
| 100*Cu/(Cu+Al) | | 16.71 | - | 9.48 | - | 46.65 | - | 15.31 | - |
| 100*(Si+Fe) /(Cu+Si+Fe) | | 0.95 | 0.95 | 1.66 | 1.66 | 17.19 | 17.19 | 38.15 | 38.15 |

Referring to FIG. 9, domains of second phase existed between crystal grain boundaries inside the matrix formed by the first phase of the Al alloy, and referring to Table 2, as the amount of Cu in the first phase increased, an increased amount of Cu was also observed in the second phase.

While the positive electrode current collectors were exposed to heat (dried during coating) susceptible to grain (crystal) growth, Cu, which was dominant among the second phase, suppressed the growth and decreased tensile strength preventing jelly-roll crack defects.

Furthermore, referring to Table 2, the current collector, represented by Examples 1 and 2, satisfied Formulas 2 to 5 as well as Formula 1. Even in the event the current collected was thinned, minimal deterioration of mechanical properties were observed, thereby improving safety of the rechargeable lithium battery.

**<Description of Symbols>**

| | | | |
|---|---|---|---|
| 100: | rechargeable lithium battery | 10: | positive electrode |
| 11: | positive electrode lead tab | 12: | positive terminal |
| 20: | negative electrode | 21: | negative electrode lead tab |
| 22: | negative terminal | 30: | separator |
| 40: | electrode assembly | 50: | case |
| 60: | sealing member | 70: | electrode tab |
| 71: | positive electrode tab | 72: | negative electrode tab |

**Claims**

**1.** A positive electrode current collector for a rechargeable lithium battery, the positive electrode current collector being formed of a heterogeneous Al alloy comprising or essentially consisting of:

a first phase consisting of Al, Cu, Fe and unavoidable impurities; and
a second phase consisting of Al, Cu, Fe, Si and unavoidable impurities,
wherein the second phase satisfies Formula 1:

[Formula 1]

$$0 < 100*A/(A+B) \leq 20$$

where A is a content of Si (at%) and B is a content of Cu (at%) based on the total amount of 100 at% of the second phase.

2. The positive electrode current collector as claimed in claim 1, wherein the second phase satisfies Formula 2:

[Formula 2]

$$0 < 100*B/(B+C) \leq 30$$

where C is a content of Al (at%) based on the total amount of 100 at% of the second phase.

3. The positive electrode current collector as claimed in any one of the preceding claims, wherein the second phase satisfies Formula 3:

[Formula 3]

$$0 < 100*(A+D)/(A+B+D) \leq 35$$

where D is a content of Fe (at%) based on the total amount of 100 at% of the second phase.

4. The positive electrode current collector as claimed in any one of the preceding claims, wherein based on the total amount of 100 at% of the second phase, the content of Si is greater than or equal to 0.1 at% and less than or equal to 4 at%, the content of Cu is greater than or equal to 20 at% and less than or equal to 60 at%, the content of Fe is greater than or equal to 1 at% and less than or equal to 15 at%, and the residue is Al and unavoidable impurities.

5. The positive electrode current collector as claimed in any one of the preceding claims, wherein the first phase satisfies Formula 4:

[Formula 4]

$$10 \leq 100*Y/(Y+Z) \leq 50$$

where Y is a content of Cu (at%) and Z is a content of Al (at%) based on the total amount of 100 at% of the first phase.

6. The positive electrode current collector as claimed in any one of the preceding claims, wherein the first phase satisfies Formula 5:

[Formula 5]

$$0 < 100*(W)/(Y+W) \leq 1$$

where W is a content of Fe (at%) based on the total amount of 100 at% of the first phase.

7. The positive electrode current collector as claimed in any one of the preceding claims, wherein based on the total amount of 100 at% of the first phase, the content of Cu is greater than or equal to 1 at% and less than or equal to 30 at%, the content of Fe is greater than or equal to 0.01 at% and less than or equal to 0.5 at% of Fe, and the residue is Al and unavoidable impurities.

8. The positive electrode current collector as claimed in any one of the preceding claims, wherein the aluminum alloy current collector has a thickness of 5 to 20 $\mu$m.

9. The positive electrode current collector as claimed in any one of the preceding claims, wherein a total Cu content is 16.0 to 22.0 at% based on a total amount of 100 at% of the first phase and the second phase.

10. A positive electrode for a rechargeable lithium battery, comprising the positive electrode current collector as claimed in claim 1.

11. A rechargeable lithium battery, comprising:

the positive electrode as claimed in claim 10;
a negative electrode; and
an electrolyte between the positive electrode and the negative electrode.

# FIG. 1

# FIG. 2

# FIG. 3

FIG. 4

FIG. 5

## FIG. 6

Examples 1 and 2

* Properties Change Start Temperature
– High Cu Content : 100℃
– Low Cu Content : 85℃

Comparative Examples 1 to 4

# FIG. 7

## FIG. 8

Europäisches
Patentamt
European
Patent Office
Office européen
des brevets

**Application Number**

EP 25 19 0441

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YOKOYAMA YOSHIHIKO ET AL: "Growth of a Single Al64Cu23Fe13 Icosahedral Quasicrystal Using the Czochralski Method and Annealing Removal of Strains", MATERIALS TRANSACTIONS, JIM, vol. 41, no. 11, 1 July 2007 (2007-07-01), pages 1583-1588, XP093337953, Retrieved from the Internet: URL:https://www.jstage.jst.go.jp/article/matertrans1989/41/11/41_11_1583/_pdf> | 1,3-5,10 | INV. C22C21/12 C22C21/14 H01M4/134 H01M4/66 |
| A | * abstract; figure 6 * | 2,6-9,11 | |
| A | CN 104 254 624 B (FURUKAWA SKY ALUMINUM CORP; NIPPON FOIL MFG) 5 October 2016 (2016-10-05) * claim 1 * | 1-11 | |

TECHNICAL FIELDS
SEARCHED (IPC)

C22C
H01M

The present search report has been drawn up for all claims

| Place of search | Date of completion of the search | Examiner |
|---|---|---|
| The Hague | 19 November 2025 | Rausch, Elisabeth |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
.................................................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 19 0441

This annex lists the patent family members relating to the patent documents cited in the above-mentioned European search report.
The members are as contained in the European Patent Office EDP file on
The European Patent Office is in no way liable for these particulars which are merely given for the purpose of information.

19-11-2025

| Patent document cited in search report | Publication date | Patent family member(s) | Publication date |
|---|---|---|---|
| CN 104254624 B | 05-10-2016 | CN 104254624 A | 31-12-2014 |
| | | EP 2843067 A1 | 04-03-2015 |
| | | JP 6174012 B2 | 02-08-2017 |
| | | JP WO2013161726 A1 | 24-12-2015 |
| | | KR 20140148498 A | 31-12-2014 |
| | | US 2015132657 A1 | 14-05-2015 |
| | | WO 2013161726 A1 | 31-10-2013 |

For more details about this annex : see Official Journal of the European Patent Office, No. 12/82